# EUROPEAN PATENT SPECIFICATION

(11) **EP 0 606 586 B1**
(45) Date of publication and mention of the grant of the patent: **16.10.1996**
(21) Application number: 93119676.0
(22) Date of filing: 07.12.1993
(51) Int. Cl.: G05D 1/03, B60Q 1/52, B60K 35/00, E01F 11/00, E01F 9/00

(54) **An indicator device for vehicles travelling along guided tracks or roads**
Anzeigesystem für Fahrzeuge entlang an einer Fahrspur fahrend
Dispositif indicateur pour véhicules circulant le long d'une voie

(30) Priority: 31.12.1992 IT TO921061
(43) Date of publication of application: 20.07.1994
(73) Proprietor: FIAT AUTO S.p.A., 10135 Torino (IT)
(72) Inventor: Collinucci, Luigi, I-10137 Torino (IT)
(74) Representative: Serra, Francesco

(56) References cited:
- EP-A- 0 035 041
- WO-A-90/04528
- DE-A- 3 240 498
- DE-U- 8 816 153
- US-A- 5 039 979
- 39TH IEEE VEH. TECH. CON. vol. 1, no. 39 , 3 May 1989 , SAN FRANCISCO CA. USA pages 443 - 445 XP76330 SALESKY 'electronic rails'

## Description

The present invention relates to an indicator device for vehicles travelling along guided tracks or roads.

As is known, guided tracks or roads are formed by defining the driving lanes by means of magnetised or non-magnetised metal strips or by burying, along the centrelines of the lanes, metal wires through which high-frequency currents flow to create a weak electromagnetic field near the wire.

Vehicles which travel along such guided tracks or roads are provided, according to the system used to define the lanes, with sensors (metal detectors, induction sensors, magnetic detectors) which indicate any deviation from the correct lane to the driver.

There may also be systems which can indicate the risk of a collision with a vehicle travelling along the same lane. Such systems are of the laser, radar, or infra-red type, etc.

In any case, the warnings supplied to the driver (which may be audible and/or visual) are essentially of the on-off type and, since they require the driver himself to interpret what a certain signal indicates, are neither precise nor ergonomic.

The above state of the art is disclosed in documents WO-A-9 004 528 and DE-A-3 240 498.

The object of the present invention is to provide means which can indicate both the departure of motor vehicles travelling along guided roads or test tracks from the correct driving lane, and the presence of motor vehicles travelling along the same lane, and which prevent the problems mentioned above.

According to the present invention, this object is achieved by virtue of an indicator device having the specific characteristics claimed in the following claims.

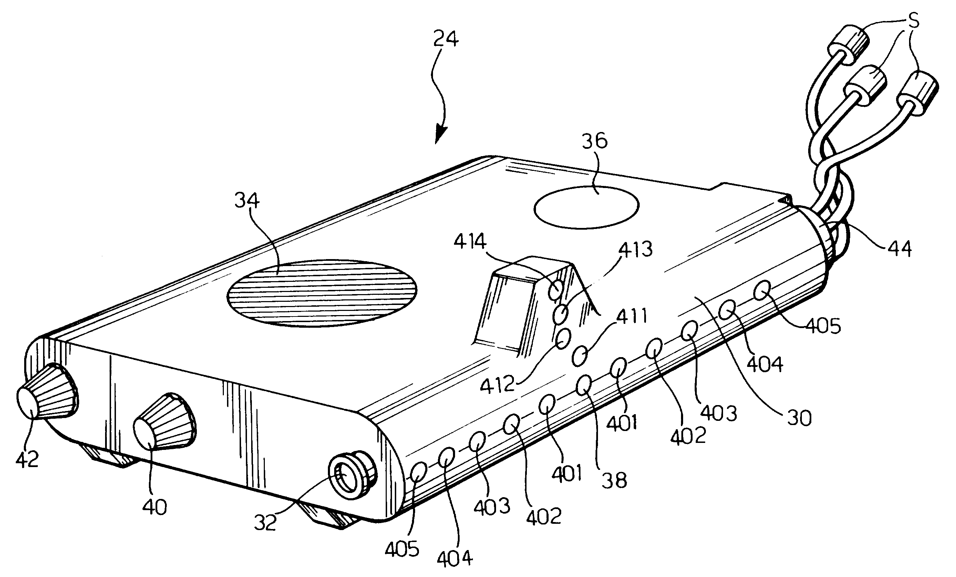

The invention will now be described, purely by way of non-limiting example, with reference to the appended drawing, in which the indicator device of the invention, which is intended to be mounted, for example, on the dashboard of a motor vehicle (not shown), is generally indicated 24.

The device 24, which is generally parallelepipedal in shape, contains circuits (possibly programmable circuits) for processing signals which come from sensors S in the motor vehicle, and which indicate that the motor vehicle has deviated from the correct lane and/or that there is a motor vehicle travelling along the same lane. The signals coming from the sensors reach a socket, for example, a multipole socket 44, for example, in one side of the device; after they have been processed, the signals are presented on a display 30.

The criteria for the generation of the signals and the criteria regulating the processing thereof within the device 24 can be considered widely known and do not need to be repeated herein, neither are they relevant for the purposes of putting into effect or understanding the invention.

For this purpose, it will suffice to mention that the device 24 has holes 34 and 36 for the emission, by means of a buzzer and a voice synthesizer, respectively, of audible signals complementary to and/or coordinated with the visual signals on the display 30.

Typically, the display 30 is shaped like an inverted T; in the centre of the T is a visual indicator such as an LED 38 which emits, for example, green light; along the arms of the T there is a plurality of visual indicators such as, for example, five LEDs 401 to 405 for each horizontal arm and four LEDs 411 to 414 for the vertical arm. On the sides of the indicator device 24 there are also a reset button 32 and controls 40 and 42 for adjusting the brightness of the LEDs and the sound intensity of the buzzer, respectively.

The indicator device 24 operates as follows.

If the motor vehicle in which the device 24 is installed is travelling correctly within its assigned lane, the central green LED 38 is switched on to indicate that the system is active.

If a change takes place in the path followed by the vehicle (for example, to the right) this is detected (in known manner) by the sensors dedicated to departures from the assigned lane and these send a respective signal to the device 24 which, having detected and interpreted (in known manner) the signal received, switches on the LEDs 401 to 405 of the right-hand arm of the display 30; at the same time, the central green LED 38 is switched off.

The LEDs may be switched on, for example, sequentially from the centre towards the side in a repetitive manner with a high frequency of repetition so that the direction in which the vehicle has deviated from the correct path is perceptible visually.

If the driver sees the signal and corrects the path of the vehicle, the sensors indicate the return to the correct lane by sending a corresponding signal to the device 24. The device then reverses the order in which the LEDs are switched on for a few moments and the side LEDs 401 to 405 are then switched off and the central LED 38 is switched on again.

A deviation to the left causes the central LED 38 to be switched off and the LEDs 401 to 405 of the left-hand arm of the inverted T to be switched on by the procedure just described for the right-hand arm.

When the sensors for detecting the presence of a vehicle receding along the same lane a short distance away become aware of such a presence, they send a respective signal to the indicator device 24 (in known manner). In this situation, when it has received and recognized the warning signal (in known manner), the device 24 switches off the central LED 38 and switches on the LEDs 411 to 414 of the vertical arm of the display 30 (according to criteria similar to those described above for indicating sideways deviations by means of the LEDs 401 to 405), thus indicating to the driver the need to slow down in order to re-establish a safe gap.

When the vehicle has returned to a safe situation, the device 24 switches off the LEDs of the vertical arm 411 to 414 and switches the central green LED 38 on again in the manner already described for the horizontal arms.

In each case, after a warning signal has remained switched on for a certain period of time (typically 1-2 seconds), the buzzer is activated and the voice synthesizer emits clear warning messages.

The reset button 32 is used to put the system in the waiting condition when the motor vehicle is travelling along unguided tracks or roads.

If a sensor is also provided for detecting an oncoming motor vehicle in the same lane, the display 30 may easily be modified to a general cross-like shape (not shown) by the addition of a lower vertical arm having LEDs in a symmetrical and specular configuration with respect to that of the upper arm (the LEDs 411 to 414).

This further vertical arm and the audible signals for this further information are switched on and off in a manner identical to that described above for the upper vertical arm.

## Claims

1. An indicator device for vehicles travelling along guided tracks or roads, comprising:
- sensor means (S) for detecting departures from the correct lane and the presence of a vehicle travelling along the same lane, and for emitting corresponding detection signals,
- processing means for receiving the detection signals and emitting corresponding warning signals, and
- a display unit (30) for presenting the warning signals,
the indicator device being characterized in that the display unit (30) comprises a first set of display elements (401 to 405) which are aligned horizontally in use, for presenting signals warning of a departure from the correct lane, and a second set of display elements (411 to 414) which are aligned vertically in use, for presenting signals warning of the presence of a vehicle travelling along the same lane.

2. An indicator device for vehicles according to Claim 1, characterized in that the display unit (30) is generally T-shaped with a plurality of display elements forming the first set (401 to 405) disposed on the horizontal arms of the T and a plurality of display elements forming the second set (411 to 414) disposed on at least one vertical arm of the T.

3. An indicator device for vehicles according to Claim 2, characterised in that the display unit (30) is generally in the shape of an inverted T so that the switching on of the display elements (411 to 414) of the vertical arm of the T indicates a vehicle a certain distance away, travelling along the same lane.

4. An indicator device for vehicles according to any one of Claims 1 to 3, characterised in that it comprises audible alarm means.

5. An indicator device for vehicles according to Claim 4, characterized in that the audible alarm means include a buzzer (34).

6. An indicator device for vehicles according to Claim 4, characterised in that the audible alarm means include an audible synthesizer (36).

7. An indicator device for vehicles according to any-one of the preceding Claims, characterised in that it comprises timing means for detecting that the display elements (401 to 405; 411 to 414) have remained switched on for a predetermined period of time in order to activate the audible signal of the buzzer (34) and of the voice synthesizer (36).

8. An indicator device for vehicles according to any one of the preceding claims, characterised in that it comprises a reset device (32) for bringing the system to the waiting condition.

9. An indicator device for vehicles according to any one of the preceding claims, characterised in that it comprises a central visual indicator (38) for indicating that the system is active.

10. An indicator device for vehicles according to any one of the preceding claims, characterised in that it comprises controls (40) for adjusting the brightness of the display elements (401 to 405; 411 to 414).

11. An indicator device for vehicles according to any one of the preceding claims, characterized in that it comprises controls (42) for adjusting the sound intensity of the buzzer (34).

## Patentansprüche

1. Eine Anzeigeeinrichtung für entlang von geführten Fahrspuren oder Straßen fahrende Fahrzeuge mit:
- Sensoren (S), um Abweichungen von der korrekten Fahrspur und das Vorhandensein eines sich auf der gleichen Fahrspur bewegenden Fahrzeuges zu erkennen und um entsprechende Erkennungssignale abzugeben
- Verarbeitungsmitteln, um die Erkennungssignale zu empfangen und korrespondierende Wamsignale zu emittieren und
- einer Anzeigeeinheit (30), um die Warnsignale darzustellen,
wobei die Anzeigeeinrichtung dadurch gekennzeichnet ist, daß
die Anzeigeeinheit (30) eine erste Gruppe von Anzeigeelementen (401 bis 405) umfaßt, die in Gebrauchslage horizontal ausgerichtet sind und die Signale abgeben, die vor einer Abweichung von der korrekten Fahrbahn warnen und eine zweite Gruppe von Anzeigeelementen (411 bis 414), die in Gebrauchslage vertikal angeordnet sind und die Signale abgeben, die vor einem Fahrzeug warnen, das sich auf derselben Fahrspur bewegt.

2. Eine Anzeigeeinrichtung für Fahrzeuge nach Anspruch 1, dadurch gekennzeichnet, daß die Anzeigeeinheit (30) im wesentlichen T-förmig ausgeführt ist mit mehreren Anzeigeelementen, die die erste Gruppe (401 bis 405) bilden und die entlang dem horizontalen T-Balken angeordnet sind, und mehreren Anzeigeelementen, die die zweite Gruppe (411 bis 414) bilden und die entlang mindestens dem vertikalen T-Balken angeordnet sind.

3. Eine Anzeigeeinrichtung für Fahrzeuge nach Anspruch 2, dadurch gekennzeichnet, daß die Anzeigeeinheit (30) im wesentlichen in der Form eines umgekehrten T so ausgeführt ist, daß das Einschalten der Anzeigeelemente (411 bis 414) des vertikalen T-Balkens das Vorhandensein eines Fahrzeuges ankündigt, welches sich in einem gewissen Abstand entlang der selben Fahrspur bewegt.

4. Eine Anzeigeeinrichtung für Fahrzeuge nach einem der Ansprüche 1 bis 3, dadurch gekennzeichnet, daß sie akustische Alarmmittel umfaßt.

5. Eine Anzeigeeinrichtung für Fahrzeuge nach Anspruch 4, dadurch gekennzeichnet, daß die akustischen Alarmmittel einen Summer (34) enthalten.

6. Eine Anzeigeeinrichtung für Fahrzeuge nach Anspruch 4, dadurch gekennzeichnet, daß die akustischen Alarmmittel einen akustischen Nachbilder (36) enthalten.

7. Eine Anzeigeeinrichtung für Fahrzeuge nach einem der vorhergehenden Ansprüche, dadurch gekennzeichnet, daß sie Zeitsteuerungsmittel (401 bis 405; 411 bis 414) enthält, die erfassen, wenn die Anzeigeelemente über eine vorgegebene Zeitspanne eingeschalten sind, um das akustische Signal des Summers (34) und des Stimmennachbilders (36) zu aktivieren.

8. Eine Anzeigeeinrichtung für Fahrzeuge nach einem der vorhergehenden Ansprüche, dadurch gekennzeichnet, daß sie eine Rückstellungseinrichtung (32) aufweist, mittels der das System in die Bereitschaftsstellung bringbar ist.

9. Eine Anzeigeeinrichtung für Fahrzeuge nach einem der vorhergehenden Ansprüche, dadurch gekennzeichnet, daß sie einen zentralen Sichtanzeiger (38) aufweist, um anzuzeigen, daß das System aktiviert ist.

10. Eine Anzeigeeinrichtung für Fahrzeuge nach einem der vorhergehenden Ansprüche, dadurch gekennzeichnet, daß sie Bedienungseinrichtungen (40), mit denen die Helligkeit der Anzeigeelemente (401 bis 405, 411 bis 414) regulierbar ist, umfaßt.

11. Eine Anzeigeeinrichtung für Fahrzeuge nach einem der vorhergehenden Ansprüche, dadurch gekennzeichnet, daß sie Bedienungseinrichtungen (42) umfaßt, mit denen die Tonintensität des Summers (34) einstellbar ist.

## Revendications

1. Dispositif indicateur pour véhicules circulant le long de voies ou de routes guidées, comportant:
- des moyens formant capteur (S) pour détecter des déviations par rapport à la piste correcte ainsi que la présence d'un véhicule circulant le long de la même piste, et pour émettre les signaux de détection correspondants,
- des moyens de traitement pour recevoir des signaux de détection et émettre des signaux d'avertissement correspondants, et
- un visuel (30) pour présenter les signaux d'avertissement, le dispositif indicateur étant caractérisé en ce que le visuel (30) comporte un premier ensemble d'éléments visuels (401 à 405) qui sont alignés horizontalement en service, pour présenter des signaux d'avertissement d'une déviation par rapport à la piste correcte, et un second ensemble d'éléments visuels (411 à 414), qui sont alignés verticalement en service, pour présenter des signaux d'avertissement de la présence d'un véhicule circulant le long de la même piste.

2. Dispositif indicateur pour véhicules selon la revendication 1, caractérisé en ce que le visuel (30) a une forme générale en T, une pluralité d'éléments visuels formant le premier ensemble (401 à 405) étant disposés sur les bras horizontaux du T et une pluralité d'éléments visuels formant le second ensemble (411 à 414) étant disposés sur au moins un bras vertical du T.

3. Dispositif indicateur pour véhicules selon la revendication 2, caractérisé en ce que le visuel (30) a la forme générale d'un T inversé de sorte que l'allumage des éléments visuels (411 à 414) du bras vertical du T indique un véhicule circulant sur la même piste, à une certaine distance.

4. Dispositif indicateur pour véhicules selon l'une quelconque des revendications 1 à 3, caractérisé en ce qu'il comporte des moyens d'alarme sonores.

5. Dispositif indicateur pour véhicules selon la revendication 4, caractérisé en ce que les moyens d'alarme sonores incluent un bruiteur (34).

6. Dispositif indicateur pour véhicules selon la revendication 4, caractérisé en ce que les moyens d'alarme sonores incluent un synthétiseur sonore (36).

7. Dispositif indicateur pour véhicules selon l'une quelconque des revendications précédentes, caractérisé en ce qu'il comporte des moyens de temporisation pour détecter que les éléments visuels (401 à 405; 411 à 414) sont restés allumés pendant une période de temps prédéterminée pour activer les signal sonore du bruiteur (34) et du synthétiseur de voix (36).

8. Dispositif indicateur pour véhicules selon l'une quelconque des revendications précédentes, caractérisé en ce qu'il comporte un dispositif de réinitialisation (32) pour ramener le système en condition d'attente.

9. Dispositif indicateur pour véhicules selon l'une quelconque des revendications précédentes, caractérisé en ce qu'il comporte un indicateur visuel central (38) pour indiquer que le système est actif.

10. Dispositif indicateur pour véhicules selon l'une quelconque des revendications précédentes, caractérisé en ce qu'il comporte des commandes (40) pour ajuster la brillance des éléments visuels (401 à 405; 411 à 414).

11. Dispositif indicateur pour véhicules selon l'une quelconque des revendications précédentes, caractérisé en ce qu'il comporte des commandes (42) pour ajuster l'intensité sonore du bruiteur (34).
